# EUROPEAN PATENT SPECIFICATION

(11) **EP 0 854 678 B1**
(45) Date of publication and mention of the grant of the patent: **13.12.2000**
(21) Application number: 96933371.5
(22) Date of filing: 19.09.1996
(51) Int. Cl.: A23D 9/007, A23L 1/222, C11B 5/00

(54) **METHOD FOR PREVENTING OFF-FLAVOUR DURING DEEP FRYING**
VERFAHREN ZUR VERHINDERUNG DES GESCHMACKSVERLUSTES BEIM FRITIEREN
PROCEDE DESTINE A EMPECHER LES FLAVEURS ATYPIQUES LORS D'UNE FRITURE

(30) Priority: 10.10.1995 EP 95202731; 02.07.1996 EP 96201812
(43) Date of publication of application: 29.07.1998
(73) Proprietor: UNILEVER N.V., 3013 AL Rotterdam (NL); UNILEVER PLC, London EC4P 4BQ (GB)
(72) Inventor: HEERINGA, Auke-Jan, NL-3071 JL Rotterdam (NL); VAN OOSTEN, Cornelis, Willem Unilever Research, NL-3133 AT Vlaardingen (NL); POTMAN, Ronald, Peter Van den Bergh Nederland, NL-3071 JL Rotterdam (NL)
(74) Representative: Sikken, Antonius H. J. M.
(86) International application number: EP9604167
(87) International publication number: WO9713414

(56) References cited:
- EP-A- 0 191 519
- EP-A- 0 434 164
- EP-A- 0 494 707
- GB-A- 625 683
- DATABASE WPI Section Ch, Week 9524 Derwent Publications Ltd., London, GB; Class D13, AN 95-181989 XP002021056 & JP,A,07 099 887 ( HOKUEIKEN CORP KK) , 18 April 1995 cited in the application

## Description

The invention relates to a method for preventing perceivable off-flavour during frying of foodstuff in triglyceride fat that has been used before for frying of foodstuff, by adding foodgrade material to the frying fat prior to the frying. It also relates to packed products for use in such method.

Preventing off-flavour development in the frying of foodstuff in triglyceride fat that is used repeatedly, has been a problem for a long time. In frying, the foodstuff to be fried is immersed in a substantial amount of hot triglyceride fat. The typical frying temperature e.g. for deep frying is in the range of 170-200°C, mostly about 180°C. Another method of frying is shallow frying, in which a foodstuff is fried in a thin layer of hot fat, e.g. a layer of 1 cm thickness or less. Because of the large amount of fat used in deep or shallow frying, the fat is normally used several times. In domestic frying, frying fat is usually used 8-12 times before it is discarded. In commercial applications, frying fat may be used for 30 or more frying applications before it is replaced by fresh triglyceride fat.

Typically, already when using fresh frying fat for the first time for frying, off-flavours are developed and released that are found to be unpleasant and therefore called off-flavours. As the fat is used repeatedly for deep frying, this off-flavour development as perceived, gets worse.

To try and prevent this, flavour substances have been incorporated in the frying fat, e.g. in an amount of typically 50 or 100 ppm. Although this proved successful in delaying off-flavour development, from the 3^{rd} or 4^{th} frying cycle onwards, off-flavour development occurred again, becoming quite unpleasant.

To overcome this problem, it has been proposed to filter the frying fat after each frying cycle, possibly using an absorbent. Filtering without using an absorbent, e.g. through a paper filter bag or a cloth has only little effect on off-flavour development. When using an absorbent, losses are high. Also, this way of treating the oil cannot readily be applied in domestic households. It requires substantial handling and creates a problem of having to discard absorbent mixed with frying fat which poses an environmental problem. Furthermore, the prevention of perceivable off-flavour development was mostly not as good as one might wish.

It has also been proposed to include a small amount of silicone oil in frying oil. However, this may be difficult to carry out depending on the factory design. Some customers may frown upon the use of such material in oil to be used for preparing foodstuff. Furthermore, the effect of preventing off-flavour development wears off after using this oil a few times for deep frying.

JP 07099887 according to the Derwent abstract, proposes, in order to prevent deterioration of the oil, to add a foodgrade material to the oil in an amount up to 0.5% of the oil, at least 1 day before it is used for frying. The additive is made by mixing and fermenting plants including Japanese radish, carrot, apple, orange plantago asiatica and aloe. The resulting fermented substance is extracted to obtain the plant mixed extract that is used as the additive. It comprises:
54.0-59.6% saccharide
0.1-0.3% protein
0.1-0.3% ash
40.6-45.0% moisture, and has
number of yeasts: 35000-39000/g
number of lactic acidbacteria: 80-120/g.
pH: 3.0-3.5

This proposal has the disadvantages that the additive is difficult to make and that it will be difficult to keep over prolonged periods of time if it's quality is to remain constant. Furthermore, adding the additive a day before use of the frying fat is cumbersome, especially if a frying fat is used that is solid at ambient temperature. Also dispersing the additive in the oil is not convenient because its constituents do not readily dissolve in frying fat. We have found that the perceivable off-flavour development in repeated cycles of deep frying using the same fat can be markedly reduced in a very simple and elegant manner. Accordingly, the invention provides a method for preventing or reducing perceivable off-flavour during frying of foodstuff in triglyceride fat that has been used before for deep frying of foodstuff, by adding foodgrade material to the frying fat prior to the frying, characterised in that the foodgrade material is fresh triglyceride fat comprising dissolved therein 0.1-10% flavour substance, and that the foodgrade material is added in an amount such that an amount of 10-500 ppm of flavour substance in the total amount of frying fat is obtained.

We have found that even if frying fat has already been used several times in deep frying, the perceivable off-flavour development in a subsequent operation can be appreciably reduced by incorporating in the frying oil, oil soluble flavour substance in an amount of 10-500 ppm, in the form of concentrated flavour substance dissolved in triglyceride fat. Preferably the triglyceride is a fresh triglyceride i.e. has not been used before for frying. We were surprised by this. We had expected that adding flavour substance to frying fat that had already deteriorated substantially in previous frying operations, would only make the perceived off-flavour in subsequent deep frying worse.

By fresh triglyceride fat is meant triglyceride fat that has not been used for frying before. The terms "oil" and "fat" are used interchangeably in this specification. The triglyceride fat into which the flavour substance is dissolved, as well as the frying fat to which it is added, can be triglyceride fat as commonly used for deep frying purposes. For example sunflower oil, groundnut oil, cottonseed oil, palm oil, palm olein, lard, tallow, partially hydrogenated oil, e.g. partially hydrogenated soybean or rapeseed oil, and mixtures of 2 or more thereof. Such fat for frying purposes is usually sold in refined form, as a liquid oil packed in bottles or cans, as a pourable or scoopable fat in bottles or cans, or as blocks of hard fat packed in wrappers or boxes. They are also available in the form of discrete particles or beadlets, solid at ambient temperatures, packed e.g. in plastic or carton containers.

The flavour substance preferably should have good solubility or mixability in oil fat so that it is readily distributed throughout the frying fat. This is achieved if a flavour substance is used with sufficient oil solubility to be able to dissolve or mix 0.1-10% flavour substance into the triglyceride fat to be used as the food grade additive. Preferably the flavour substance has a solubility or mixability in triglyceride oil even exceeding 10%.

The triglyceride fat that is added to the frying fat that has already been used before for deep frying, preferably comprises dissolved therein 0.5-5% of flavour substance. Preferably this food grade material is added in an amount such that the total lot of frying fat contains 50-250 ppm of flavour substance.

The triglyceride fat with the flavour substance dissolved therein is preferably added to the frying fat that has already been used for frying before, while the frying fat is in a liquid or semi-liquid state. If the frying fat is liquid, pourable or scoopable at ambient temperature, conveniently it is stirred in before starting heating of the frying fat. Alternatively, or if a frying fat is used that is solid at ambient temperature, heating of the frying fat can be started first and the additive stirred in somewhat later, when at least part of the fat has molten. The additive can also be added when the frying fat has reached the frying temperature. When such later addition is considered inconvenient, e.g. when using a closed friteuse, the additive can also be poured onto the frying fat, whether it is liquid or solid, before starting the heating. The turbulence in the fat during the heating and subsequent frying will be sufficient to distribute the freshly added triglyceride fat and the flavour substance dissolved therein throughout the whole lot of frying fat. Another possible use of the flavour concentrate of the invention is to use it as a fat base in the shallow frying of foodstuffs.

For the purpose of the invention or a wide range of favouring substances may be used, for example herbs, spices, flavourments etc. We have obtained very good results when using flavour substance that has a lemon or lime flavour. The use of such flavour substance is preferred, but if so desired, flavour substance with other flavour directions, e.g. lard, tallow, butter or roasted sesame flavour, can be used instead. We have obtained particularly beneficial results when using flavour substance that comprises linaloöl (3,7 dimethyl 1,6 octadien 3 ol) and/or linalyl acetate (=linaloöl acetate=linareol acetate) as described in EP 191,519 and EP 256,607. Preferably linaloöl and/or linalyl acetate are present in the flavour substance of the fresh triglyceride fat in an amount such that their combined amount calculated on the total amount of frying fat is 0.5-50 ppm, more preferably 1-25 ppm. Flavour substance comprising such components is commercially available, e.g. from Quest International, Naarden, Netherlands.

The triglyceride fat comprising the flavour substance dissolved therein, may be in the liquid form, e.g. packed in bottles, plastic sealed cups or plastic bags. It may also be in scoopable or pourable form, packed in e.g. tubs, bottles or jars or it may be in solid blocks, e.g. packed in wrappers or boxes. In a preferred embodiment the triglyceride fat comprising the flavour substance dissolved therein is in the form of discrete particles, e.g. having an average diameter of 0.5 to 15 mm e.g. 0.5-6 mm. Surprisingly, such particles combine good keepability with convenient handling. Furthermore they can be packed in simple packaging preferably e.g. paper bags or carton boxes. Such particles can be produced in a way similar to that known in the art for producing frying fat or the like in the form of discrete particles. For example, a triglyceride fat solid at ambient temperature, e.g. soybean oil hydrogenated to a slip melting point of 43°C is heated to completely melt it, e.g. to 55-60°C. The flavour substance is stirred into it to dissolve it, and the composition is sprayed in droplets onto a cold surface on which they solidy. Then the discrete particles obtained are collected from the surface, e.g. by using a cold moving belt with a scraper knife fitted at the end, and packed.

The invention encompasses a packed portion containing 0.3-500 g e.g. 0.3 to 100 g of triglyceride fat comprising dissolved therein 0.1-10% flavour substance. Such materials can be used in the present method. For example, in typical domestic deep frying, about 2 kg of frying fat is used. If a triglyceride fat with 2% flavour substance dissolved therein is used, than to obtain 100 ppm flavour substance in the frying fat, 10 gr of the additive should be used. Thus, in such case, the packed portion suitable contains 10 gr of the additive, and one pack is added to the frying fat before each frying operation until the frying fat is discarded.

The invention further encompasses a pack comprising separately packed parts, one part of which comprises fresh frying fat and at least one part of which comprises fresh triglyceride fat comprising dissolved therein 0.1-10% flavour substance. Preferably the pack comprises 2-12, more preferably 6-10 separately packed parts each of which comprises 0.3-25 gr fresh triglyceride fat comprising dissolved therein 0.1-10% flavour substance.

The composition and physical state of the frying fat can be as usually employed for deep or shallow frying fat, e.g. as described above. It may include any additives commonly employed in fat for deep frying purposes, e.g. flavour and silicone oil. Thus the pack provides both the frying oil as well as the additive to be added before each frying operation to prevent or reduce perceivable off-flavour development. If the frying fat does not include any flavour it is recommended to add additive also for the first deep frying operation as well as for each subsequent one. The preferences expressed above with respect to the flavour substance for the present method, also apply for the flavour substance of the packed portion and of the pack.

The triglyceride fat comprising the flavour substance dissolved therein, used in the pack and in the packed portion may be in liquid, pourable, scoopable or solid form, packed in bottles, jars, sealed cups, wrappers, boxes, plastic bags or the like. Preferably it is in the form of paper or plastic or laminated bags, e.g. as used for portion packs of sugar, salt, ketchup and the like.

The frying fat of the pack preferably also is in the form of discrete particles.

Throughout this specification, ppms, percentages, parts and proportions refer to weight unless otherwise indicated.

### Example I

Soya bean oil was hydrogenated to a slip melting point of 43°C and refined in conventional manner. A part of the oil was heated to 55°C and 100 ppm of a flavour substance having a lemon flavour was dissolved in it. The oil was sprayed onto a cold moving belt and the solidified particles were collected at the end. The particles were packed into plastic bags containing 2 kg of particles each. The remaining part of the oil was heated to 55°C, 2% of the same flavour substance was dissolved in it and discrete particles were formed in the same way. Packed portions were formed by packing into sealed paper bags with an inner PE lining, 10 g each of the particles. Packs were made by putting one plastic bag with 2 kg frying fat in a carton and putting 9 of the packed portions on top of it before closing the carton.

Parallel frying tests were done using 2 deep frying pans placed at 7 meter distance from each other. Perceivable off-flavour development was evaluated blind by an experienced panel.

In each pan a pack of 2 kg of the frying fat was done, the fat was heated to 180°C and 200 gr frozen potato chips were fried into it while heating continued to compensate for the temperature drop caused by the potato chips. Heating was stopped when the temperature reached 180°C again. After frying, the oil was allowed to cool down. Then, using the same oil, this frying was repeated the next day and so on until the fat had been used for frying 10 times. After the 3^{rd} and the 6^{th} frying operations, fresh frying fat was added to compensate for the oil loss caused by the fat uptake of the potato chips.

In pan A, except for this topping up with fresh frying fat, no further additives were used. In pan B, for the second and each subsequent frying, after the fat had been heated to such an extent that a substantial amount of the frying fat had become liquid, the 10 gram contents of one packed portion described above, were poured into the liquid part of the fat.

For the first time frying, the averaged scores of the panel were the same for the two pans. For the second frying, the results showed a slight preference for pan B but the difference was not significant. From the 3^{rd} frying onwards, there was a significant preference for pan B. Especially for the last 5 frying operations substantially less off-flavour development was observed for pan B compared with pan A.

### Example II

Palm oil was mixed with palm oil hydrogenated to a melting point of 58 C in a ratio of 1 to 1. This fatblend was heated to 70 C and 5% pepper particles and 2% dried parsley leaves were dispersed under continuous agitation in this heated fat blend. The fat was sprayed or dropped onto a moving cooled conveyer belt and the solidified beadlets were collected at the end. The beadlets containing pepper and parsley were packed in carton boxes containing 250 grams.

### Example III

Palm oil was mixed with palm oil hydrogenated to a melting point of 58 C in a ratio of 1 to 1. This fatblend was heated to 70 C under continuous agitation. The fat was sprayed or dropped onto a moving cooled conveyer belt. Just after the fat had been dropped or sprayed on the conveyer belt, pepper particles and/or dried herb leaves were sprayed on the still not solidified fat beadlets. The solidified beadlets with the herb and/or pepper particles sticked on the surface were collected at the end and packed in carton boxes containing 450 grams.

## Claims

1. Method for preventing or reducing perceivable off-flavour during frying of foodstuff in triglyceride fat that has been used before for frying of foodstuff, by adding foodgrade material to the frying fat prior to the frying characterised in that the foodgrade material is fresh triglyceride fat comprising 0.1-10% flavour substance, and that the foodgrade material is added in an amount such that an amount of 10-500 ppm of flavour substance in the total amount of frying fat is obtained.

2. Method according to claim 1 wherein the fresh triglyceride fat comprises dissolved therein 0.5-5% flavour substance.

3. Method according to claim 1 wherein the amount added is such that an amount of 50-250 ppm of flavour substance in the total amount of frying fat is obtained.

4. Method according to claim 1 wherein the flavour substance has a lemon or lime flavour.

5. Method according to claim 1 wherein the flavour substance comprises linalo öl and/or linalyl acetate.

6. Method according to claim 1 wherein the fresh triglyceride fat comprising the flavour substance is in the form of discrete particles.

7. Packed portion comprising 0.3-500 g of triglyceride fat comprising 0.1-10% flavour substance, wherein the triglyceride fat is in the form of discrete particles.

8. Pack comprising at least 2 separately packed parts, one part of which comprises fresh frying fat and at least one part of which comprises fresh triglyceride fat comprising dissolved therein 0.1-10% flavour substance.

9. Pack according to claim 8 comprising 2-12 separately packed parts each of which comprises 0.3-25 g fresh triglyceride fat comprising dissolved therein 0.1-10% flavour substance.

10. Pack according to claim 8 wherein both the fresh frying fat and the fresh triglyceride fat comprising flavour substance dissolved therein, are in the form of discrete particles.

## Patentansprüche

1. Verfahren zum Vermeiden oder Verringern eines wahrnehmbaren Nebenaromas während dem Frisieren bzw. Braten von Nahrungsmitteln in Triglyceridfett, das bereits zuvor zum Fritieren bzw. Braten von Nahrungsmitteln verwendet worden ist, durch Zugeben eines Materials von Nahrungsmittelqualität zu dem Bratfett vor dem Fritieren bzw. Braten, dadurch gekennzeichnet, daß das Material von Nahrungsmittelqualität frisches Triglyceridfett ist, das 0,1-10% Aromasubstanz umfaßt, und daß das Material von Nahrungsmittelqualität in einer solchen Menge zugefügt wird, daß in der Gesamtmenge des Bratfettes eine Menge von 10-500 ppm Aromasubstanz erhalten wird.

2. Verfahren nach Anspruch 1, bei welchem das frische Triglyceridfett darin gelöst 0,5-5% Aromasubstanz umfaßt.

3. Verfahren nach Anspruch 1, bei welchem die zugefügte Menge so bemessen ist, daß in der Gesamtmenge des Bratfettes eine Menge von 50-250 ppm Aromasubstanz erhalten wird.

4. Verfahren nach Anspruch 1, bei welchem die Aromasubstanz Zitronen- oder Limonenaroma aufweist.

5. Verfahren nach Anspruch 1, bei welchem die Aromasubstanz Linaloöl und/oder Linalylacetat umfaßt.

6. Verfahren nach Anspruch 1, bei welchem das die Aromasubstanz umfassende frische Triglyceridfett in Form diskreter Teilchen vorliegt.

7. Abgepackte Portion, umfassend 0,3-500 g Triglyceridfett, das 0,1-10% Aromasubstanz umfaßt, worin das Triglyceridfett in Form diskreter Teilchen vorliegt.

8. Packung, umfassend mindestens zwei getrennt abgepackte Anteile, von denen ein Anteil frisches Bratfett und mindestens ein Anteil frisches Triglyceridfett umfaßt, das darin gelöst 0,1-10% Aromasubstanz umfaßt.

9. Packung nach Anspruch 8, umfassend 2 bis 12 getrennt abgepackte Anteile, von denen jeder 0,3-25 g frisches Triglyceridfett umfaßt, das darin gelöst 0,1-10% Aromasubstanz umfaßt.

10. Packung nach Anspruch 8, worin sowohl das frische Bratfett als auch das die Aromasubstanz umfassende frische Triglyceridfett in Form diskreter Teilchen vorliegen.

## Revendications

1. Procédé pour empêcher ou réduire les flaveurs atypiques perceptibles pendant la friture des aliments dans une graisse de triglycérides déjà utilisée pour la friture d'aliments, en ajoutant une matière de qualité alimentaire à la graisse de friture avant de faire frire, caractérisé en ce que la matière de qualité alimentaire est une graisse de triglycérides fraîche comprenant 0,1 à 10% de substance aromatisante et en ce qu'on ajoute la matière de qualité alimentaire en une quantité telle qu'on obtient une quantité de 10 à 500 ppm de substance aromatisante dans la quantité totale de graisse de friture.

2. Procédé selon la revendication 1, dans lequel la graisse de triglycérides fraîche comprend en dissolution 0,5 à 5% de substance aromatisante.

3. Procédé selon la revendication 1, dans lequel la quantité ajoutée est telle qu'on obtient une quantité de 50 à 250 ppm de substance aromatisante dans la quantité totale de graisse de friture.

4. Procédé selon la revendication 1, dans lequel la substance aromatisante a un arôme de citron ou de lime.

5. Procédé selon la revendication 1, dans lequel la substance aromatisante comprend un linaloöl et/ou un acétate de linalyle.

6. Procédé selon la revendication 1, dans lequel la graisse de triglycérides fraîche comprenant la substance aromatisante est sous forme de particules séparées.

7. Portion emballée comprenant 0,3 à 500 g de graisse de triglycérides comprenant 0,1 à 10% de substance aromatisante, dans laquelle la graisse de triglycérides est sous forme de particules séparées.

8. Paquet comprenant au moins 2 parties emballées séparément, une partie comprenant une graisse de friture fraîche et au moins une partie comprenant une graisse de triglycérides fraîche comprenant en dissolution 0,1 à 10% de substance aromatisante.

9. Paquet selon la revendication 8, comprenant 2 à 12 parties emballées séparément, chacune comprenant 0,3 à 25 g de graisse de triglycérides fraîche comprenant en dissolution 0,1 à 10% de substance aromatisante.

10. Paquet selon la revendication 8, dans lequel la graisse de friture fraîche et la graisse de triglycérides fraîche comprenant en dissolution la substance aromatisante sont sous forme de particules séparées.
